# EUROPÄISCHE PATENTSCHRIFT

(11) **EP 1 326 803 B1**
(45) Veröffentlichungstag und Bekanntmachung des Hinweises auf die Patenterteilung: **18.08.2004**
(21) Anmeldenummer: 01967319.3
(22) Anmeldetag: 07.09.2001
(51) Int. Cl.: C01B 33/02, C01B 33/107

(54) **VERFAHREN ZUR HERSTELLUNG VON TRICHLORSILAN**
METHOD FOR PRODUCING TRICHLOROSILANE
PROCEDE DE PRODUCTION DE TRICHLOROSILANE

(30) Priorität: 14.09.2000 DE 10045367
(43) Veröffentlichungstag der Anmeldung: 16.07.2003
(73) Patentinhaber: SOLARWORLD AKTIENGESELLSCHAFT, 53113 Bonn (DE)
(72) Erfinder: BULAN, Andreas, 40764 Langenfeld (DE); WEBER, Rainer, 51519 Odenthal (DE); MLECZKO, Leslaw, 44801 Bochum (DE)
(74) Vertreter: Rau, Albrecht
(86) Internationale Anmeldenummer: PCT/EP2001/010360
(87) Internationale Veröffentlichungsnummer: WO 2002/022500

(56) Entgegenhaltungen:
- DE-A- 4 104 422
- DE-A- 19 654 154
- US-A- 4 676 967

## Beschreibung

Die vorliegende Erfindung betrifft ein Verfahren zur Herstellung von Trichlorsilan durch Umsetzung von Silicium mit Siliciumtetrachlorid, Wasserstoff und gegebenenfalls Chlorwasserstoff in Gegenwart eines Katalysators mit geringem Korndurchmesser.

Trichlorsilan HSiCl₃ ist ein wertvolles Zwischenprodukt beispielsweise zur Herstellung von hochreinem Silicium, von Dichlorsilan H₂SiCl₂, von Silan SiH₄ und von Haftvermittlern.

Hochreines Silicium findet vielseitige Verwendung für elektronische und photovoltaische Zwecke, beispielsweise zur Herstellung von Solarzellen. Zur Herstellung von hochreinem Silicium wird beispielsweise metallurgisches Silicium in gasförmige Siliciumverbindungen, vorzugsweise Trichlorsilan, überführt, diese Verbindungen gereinigt und anschließend wieder in Silicium zurückgeführt.

Die Herstellung von Trichlorsilan erfolgt hauptsächlich durch Umsetzung von Silicium mit Chlorwasserstoff oder von Silicium mit Siliciumtetrachlorid, Wasserstoff und gegebenenfalls Chlorwasserstoff (Ullmann's Encyclopedia of Industrial Chemistry, 5^{th} ed. (1993), Vol. A24, 4-6). Die Reaktion von Silicium mit Siliciumtetrachlorid und Wasserstoff wird dabei in der Regel unter Einsatz von Katalysatoren durchgeführt, wobei hauptsächlich Kupferkatalysatoren zum Einsatz kommen. Das Einsetzen von Trichlorsilan für die Gewinnung von Reinst-Silicium ist aus der US 4 676 967 A bekannt.

Aus der DE 41 04 422 A1 ist bekannt, die Umsetzung von Silicium mit Siliciumtetrachlorid und Wasserstoff in einem Wirbelbett ohne Anwendung von Druck in Gegenwart von Kupfersalzen einer niederen, aliphatischen, gesättigten Dicarbonsäure, insbesondere Kupferoxalat durchzuführen.

Ebenfalls ist es bekannt, die Reaktion von Silicium mit Siliciumtetrachlorid, Wasserstoff und gegebenenfalls Chlorwasserstoff in Gegenwart von pulverförmigem Kupfer (Chemical Abstracts CA 101, Nr. 9576d, 1984) oder von Gemischen aus Kupfermetall, Metallhalogeniden und Bromiden oder Iodiden von Eisen, Aluminium oder Vanadium (Chemical Abstracts CA 109, Nr. 57621b, 1988) durchzuführen.

Aus US-A-4,504,597 ist ein Kupfer-Katalysator bekannt, der durch Hochenergie-Mahlung von kupferhaltigen Partikeln mit einem mittleren Partikeldurchmesser > 15 µm in einer Palla-Mühle hergestellt wird. Dieser Katalysator eignet sich gemäß US-A-4,504,597 als Katalysator für die Umsetzung von Silicium mit Alkyl- bzw. Arylhalogeniden zu Alkyl- bzw. Arylhalosilanen. Der Katalysator besteht hauptsächlich aus Cu₂O, CuO, Cu und gegebenenfalls Promotoren und weist nach dem Mahlvorgang eine mittlere Partikelgröße von im Wesentlichen nicht über 15 µm auf. Eine Verwendung dieses Katalysators in einem Verfahren zur Herstellung von Trichlorsilan ist nicht erwähnt.

Die Herstellung von Trichlorsilan wird üblicherweise in der Wirbelschicht durchgeführt (Ullmann's Encyclopedia of Industrial Chemistry, 5^{th} ed. (1993), Vol. A24, 4-6). Aus der Wirbelschicht werden jedoch kleine Partikel durch den Gasstrom ausgetragen. Der Einsatz eines Katalysators mit besonders kleiner Partikelgröße erscheint daher nicht sinnvoll, da kleine Partikel sofort wieder ausgetragen würden.

Aus der DE 196 54 154 A1 ist ein Verfahren zur Herstellung von Trichlorsilan durch Umsetzung von Silicium mit Wasserstoff und Siliciumtetrachlorid in Gegenwart eines Katalysators bekannt. Im Rahmen eines Vergleichsbeispiels wird eine derartige Umsetzung auch mit Silicium-Teilchen eines mittleren Teilchendurchmessers von 150 µm und Kupferpulver mit einem mittleren Teilchendurchmesser von etwa 5 µm vorgenommen. Bei diesem Korndurchmesserverhältnis wurde beobachtet, dass der Druckabfall des Wirbelschichtbetts allmählich abnormale Schwankungen zeigte, und dass der Fluidzustand extrem schlecht wurde. Zudem wurde beim Inspizieren der Teilchen nach dem Öffnen des Reaktors nach dem Abkühlen in den herausgenommenen Teilchen ein Agglomerat von Kupferpulver und ein Agglomerat von Silciumteilchen vom metallurgischen Grad festgestellt. Zudem wurde beobachtet, dass die Innenwand eines Teilchenaustragungsrohrs teilweise mit massiven Produkten verstopft war.

Überraschenderweise wurde gefunden, dass die Reaktion von Silicium mit Siliciumtetrachlorid, Wasserstoff und gegebenenfalls Chlorwasserstoff zu Trichlorsilan in Gegenwart eines fein verteilten Katalysators geringen Korndurchmessers besser katalysiert wird als in Gegenwart eines Katalysators mit großem Korndurchmesser, wobei unerwarteterweise kein nennenswerter Katalysatoraustrag beobachtet wird.

Gegenstand der Erfindung ist demnach ein Verfahren zur Herstellung von Trichlorsilan durch Umsetzung von Silicium mit Wasserstoff, Siliciumtetrachlorid und gegebenenfalls Chlorwasserstoff in Gegenwart eines Katalysators, das dadurch gekennzeichnet ist, dass der Katalysator einen mittleren Korndurchmesser aufweist, der um den Faktor 50 bis 100 kleiner ist, als der mittlere Korndurchmesser des eingesetzten Siliciums.

Bevorzugt weist der Katalysator einen mittleren Komdurchmesser auf, der um den Faktor 70 bis 100 kleiner ist, als der mittlere Korndurchmesser des eingesetzten Siliciums.

Der mittlere Korndurchmesser wird dabei als arithmetisches Mittel der Werte bestimmt, die sich bei einer Siebanalyse des Katalysators bzw. Siliciums ergeben. Die Prinzipien der Siebanalyse sind beispielsweise in "Ullmanns Encyklopädie der technischen Chemie, 4. Auflage, Band 2, S. 3U-31" beschrieben.

Besonders vorteilhaft ist es, wenn der Katalysator mit dem Silicium vor der Reaktion innig gemischt wird. Dies kann beispielsweise durch intensive Mischung in einem Pflugscharmischer oder Triaxialmischer oder anderen Mischapparaten, die eine intensive Feststoff- Feststoffmischung erzeugen können, erfolgen.

Bevorzugt ist die Vermischung in einem Pflugscharmischer.

Als Katalysatoren können beispielsweise Kupfer- und/oder Eisenkatalysatoren eingesetzt werden.

Geeignete Kupferkatalysatoren sind beispielsweise Kupfer, vorzugsweise in Form von Kupferpulver mit einer mittleren Korngröße von weniger als 100 µm, besonders bevorzugt mit einem mittleren Korndurchmesser von weniger als 20 µm, oder Verbindungen des Kupfers, vorzugsweise Kupferoxid, in der das Kupfer die Oxidationsstufe I besitzt oder Kupferhalogenid, besonders bevorzugt Kupferchlorid, wie z.B. Kupfer-I-chlorid.

Geeignete Eisenkatalysatoren sind beispielsweise Eisen, vorzugsweise in Form von Eisenpulver mit einer Korngröße von weniger als 100 µm, besonders bevorzugt mit einem mittleren Komdurchmesser von weniger als 10 µm, oder Verbindungen des Eisens, vorzugsweise Eisenhalogenide, besonders bevorzugt Eisenchloride, insbesondere bevorzugt Eisen-II-chlorid.

Es ist auch möglich, Mischungen aus Kupfer- und/oder Eisenkatalysatoren mit weiteren katalytisch aktiven Bestandteilen einzusetzen. Solche katalytisch aktiven Bestandteilen sind beispielsweise Metallhalogenide, wie z.B. Chloride, Bromide oder Iodide des Aluminiums, Vanadiums oder Antimons.

Als Silicium kann prinzipiell jedes Silicium eingesetzt werden, wobei der Einsatz von metallurgischem Silicium bevorzugt ist. Vorzugsweise wird Silicium mit einem mittleren Korndurchmesser von 10 bis 1000 µm, besonders bevorzugt von 100 bis 600 µm, eingesetzt.

Die Mischung aus Silicium und Katalysator kann, bevor diese Mischung zum Umsatz mit Siliciumtetrachlorid, Wasserstoff und gegebenenfalls Chlorwasserstoff gelangt, einer Vorreaktion, z.B. mit Chlorwasserstoff oder Chlorwasserstoff und Wasserstoff unterzogen werden.

Zur Vorreaktion kann die Mischung aus Silicium und Katalysator beispielsweise bei Temperaturen zwischen 250 bis 500°C, vorzugsweise zwischen 300 und 350°C, mit Chlorwasserstoff und Wasserstoff im Molverhältnis von 1:0 bis 1:10, vozugsweise 1:0,5 in Kontakt gebracht werden. Die Mischung aus Silicium und Katalysator wird dabei vorzugsweise fluidisiert.

Üblicherweise wird eine Mischung aus Silicium und Katalysator hergestellt, in der die Konzentration des Katalysators, berechnet als Metall, zwischen 0,5 bis 10 Gew.-%, bezogen auf des Gesamtgewicht der Mischung liegt, vorzugsweise zwischen 1 bis 5 Gew.-%. Es ist jedoch auch möglich, eine Mischung aus Silicium und Katalysator mit einer höheren Konzentration an Katalysator einzusetzen.

Das erfindungsgemäße Verfahren kann beispielsweise bei einem Druck von 1 bis 40 bar (absolut), bevorzugt von 20 bis 35 bar durchgeführt werden.

Beispielsweise wird bei Temperaturen von 400 bis 800°C, bevorzugt von 450 bis 600°C, gearbeitet.

Die Wahl des Reaktors, in dem die erfindungsgemäße Umsetzung erfolgen soll, ist nicht kritisch, solange der Reaktor unter den Reaktionsbedingungen hinreichende Stabilität aufweist und den Kontakt der Ausgangsstoffe erlaubt. Beispielsweise kann in einem Festbettreaktor, einem Drehrohrofen oder einem Wirbelbettreaktor gearbeitet werden. Die Reaktionsführung in einem Wirbelbettreaktor ist bevorzugt.

Das Molverhältnis von Wasserstoff zu Siliciumtetrachlorid kann bei der erfindungsgemäßen Umsetzung beispielsweise 0,25:1 bis 4:1 betragen. Bevorzugt ist ein Molverhältnis von 0,6:1 bis 2:1.

Bei der erfindungsgemäßen Umsetzung kann Chlorwasserstoff zugegeben werden, wobei die Menge an Chlorwasserstoff in weiten Bereichen variiert werden kann. Bevorzugt wird Chlorwasserstoff in einer solchen Menge zugegeben, dass ein Molverhältnis von Siliciumtetrachlorid zu Chlorwasserstoff von 1:0 bis 1:10, besonders bevorzugt von 1:0,5 bis 1:1 resultiert.

Bevorzugt wird das erfindungsgemäße Verfahren in Gegenwart von Chlorwasserstoff durchgeführt.

Das nach dem erfindungsgemäßen Verfahren hergestellte Trichlorsilan kann beispielsweise zur Herstellung von Silan und/oder Reinst-Silicium verwendet werden.

Demnach betrifft die Erfindung auch ein Verfahren zur Herstellung von Silan und/oder Reinst-Silicium ausgehend von Trichlorsilan, das nach dem oben beschriebenen Verfahren erhalten wird.

Bevorzugt wird das erfindungsgemäße Verfahren in ein Gesamtverfahren zur Herstellung von Silan und/oder Reinst-Silicium integriert.

Besonders bevorzugt wird das erfindungsgemäße Verfahren in ein mehrstufiges Gesamtverfahren zur Herstellung von Reinst-Silicium integriert, wie es beispielsweise in "Economics of Polysilicon Process, Osaka Titanium Co., DOE/JPL 1012122 (1985), 57-78" beschrieben ist und das folgende Schritte umfasst:
a) Herstellung von Trichlorsilan,
b) Disproportionierung von Trichlorsilan unter Gewinnung von Silan,
c) Reinigung des Silans zu Reinst-Silan und
d) Thermische Zersetzung des Silans in einem Wirbelbettreaktor unter Abscheidung von Reinst-Silicium auf Silicium-Partikeln, die das Wirbelbett bilden.

Ganz besonders bevorzugt wird das erfindungesgemäße Verfahren in ein Verfahren zur Herstellung von Silan und/oder Reinst-Silicium integriert, das aus folgenden Schritten besteht:
1. Trichlorsilan-Synthese nach dem erfindunggemäßen Verfahren mit anschließender destillativer Isolierung des erzeugten Trichlorsilans und Rückführung des nicht umgesetzten Siliciumtetrachlorids und gewünschtenfalls des nicht umgesetzten Wasserstoffs.
2. Disproportionierung des Trichlorsilans zu Silan und Siliciumtetrachlorid über die Zwischenstufen Dichlorsilan und Monochlorsilan an basischen Katalysatoren, vorzugsweise Amingruppen enthaltenden Katalysatoren, in apparativ zweistufiger oder einstufiger Ausführung und Rückführung des erzeugten, als Schwersieder anfallenden Siliciumtetrachlorids in die erste Verfahrensstufe.
3. Verwendung des Silans in der im vorangehenden Schritt anfallenden Reinheit oder Reinigung des Silans auf die vom weiteren Verwendungszweck geforderte Reinheit, vorzugsweise durch Destillation, besonders bevorzugt durch Destillation unter Druck.
   und gegebenenfalls
4. Thermische Zersetzung des Silans zu Reinst-Silicium, üblicherweise oberhalb 500 °C.

Neben der thermischen Zersetzung an elektrisch beheizten Reinst-Silicium-Stäben ist dazu die thermische Zersetzung in einem Wirbelbett aus Reinst-Silicium-Partikeln geeignet, besonders wenn die Herstellung von solar grade Reinst-Silicium angestrebt ist. Zu diesem Zweck kann das Silan mit Wasserstoff und/oder mit Inertgasen im Mol-Verhältnis 1 : 0 bis 1 : 10 gemischt werden.

## Patentansprüche

1. Verfahren zur Herstellung von Trichlorsilan durch Umsetzung von Silicium mit Wasserstoff, Siliciumtetrachlorid und gegebenenfalls Chlorwasserstoff in Gegenwart eines Katalysators, **dadurch gekennzeichnet, dass** der Katalysator einen mittleren Korndurchmesser aufweist, der um den Faktor 50 bis 100 kleiner ist als der mittlere Komdurchmesser des eingesetzten Siliciums.

2. Verfahren gemäß Anspruch 1, **dadurch gekennzeichnet, dass** das Silicium einen mittleren Korndurchmesser von 10 bis 1000 µm aufweist.

3. Verfahren gemäß mindestens einem der Ansprüche 1 bis 2, **dadurch gekennzeichnet, dass** als Katalysator Kupferoxid eingesetzt wird.

4. Verfahren gemäß mindestens einem der Ansprüche 1 bis 2, **dadurch gekennzeichnet, dass** als Katalysator Kupferhalogenid eingesetzt wird.

5. Verfahren gemäß mindestens einem der Ansprüche 1 bis 2, **dadurch gekennzeichnet, dass** als Katalysotor Eisenpulver und/oder Eisenhalogenid eingesetzt wird.

6. Verfahren gemäß mindestens einem der Ansprüche 1 bis 5, **dadurch gekennzeichnet, dass** die Konzentration des Katalysators in der Mischung aus Silicium und Katalysator, berechnet als Metall 0,5 bis 10 Gew.-%, bezogen auf das Gewicht der Mischung, beträgt.

7. Verfahren gemäß mindestens einem der Ansprüche 1 bis 6, **dadurch gekennzeichnet, dass** die Umsetzung bei einem Druck von 1 bis 40 bar (absolut) durchgeführt wird.

8. Verfahren gemäß mindestens einem der Ansprüche 1 bis 7, **dadurch gekennzeichnet, dass** die Umsetzung bei Temperaturen von 400 bis 800° C durchgeführt werden.

9. Verfahren gemäß mindestens einem der Ansprüche 1 bis 8, **dadurch gekennzeichnet, dass** das Molverhältnis von Wasserstoff zu Siliciumtetrachlorid 0,25 : 1 bis 4 : 1 beträgt.

10. Verfahren gemäß mindestens einem der Ansprüche 1 bis 9, **dadurch gekennzeichnet, dass** das Molverhältnis von Siliciumtetrachlorid zu Chlorwasserstoff 1 : 0 bis 1: 10 beträgt.

11. Verfahren zur Herstellung von Silan und/oder Reinst-Silicium mit folgenden Verfahrensschritten:
- Umsetzen von Silicium mit Wasserstoff, Siliciumtetrachlorid und ggf. Chlorwasserstoff in Gegenwart eines Katalysators, der einen mittleren Korndurchmesser aufweist, der um den Faktor 50 bis 100 kleiner ist als der mittlere Korndurchmesser des eingesetzten Siliciums,
- Herstellen des Silans und/oder des Reinst-Siliciums, ausgehend von dem durch das Umsetzen hergestellten Trichlorsilan.

## Claims

1. A method for producing trichlorosilane by reacting silicon with hydrogen, silicon tetrachloride and, if necessary, hydrogen chloride, in the presence of a catalyst, **characterized in that** the catalyst has an average grain diameter that is a factor 50 to 100 smaller than the average grain diameter of the silicon used.

2. A method according to Claim 1, **characterized in that** the silicon has an average grain diameter of 10 to 1000 µm.

3. A method according to at least one of Claims 1 to 2, **characterized in that** the catalyst used is copper oxide.

4. A method according to at least one of Claims 1 to 2, **characterized in that** the catalyst used is copper halogenide.

5. A method according to at least one of Claims 1 to 2, **characterized in that** the catalyst used is iron powder and/or iron halogenide.

6. A method according to at least one of Claims 1 to 5, **characterized in that** the concentration of catalyst in the mixture of silicon and catalyst, catalyst being calculated as metal, is between 0.5 to 10 weight percent catalyst based on the total weight of the mixture.

7. A method according to at least one of Claims 1 to 6, **characterized in that** the reaction is carried out at a pressure of 1 to 40 bar (absolute).

8. A method according to at least one of Claims 1 to 7, **characterized in that** the reaction is carried out at temperatures from 400 to 800°C.

9. A method according to at least one of Claims 1 to 8, **characterized in that** the mol ratio of hydrogen to silicon tetrachloride is 0.25:1 to 4:1.

10. A method according to at least one of Claims 1 to 9, **characterized in that** the mol ratio of silicon tetrachloride to hydrogen chloride is 1:0 to 1:10.

11. A method for producing silane and/or hyper-pure silicon, comprising the following steps:
- reacting silicon with hydrogen, silicon tetrachloride and, if necessary, hydrogen chloride, in the presence of a catalyst which has an average grain diameter that is a factor 50 to 100 smaller than the average grain diameter of the silicon used;
- producing the silane and/or the hyper-pure silicon, proceeding from the trichlorosilane produced by the reaction.

## Revendications

1. Procédé de fabrication de trichlorosilane par transformation de silicium avec de l'hydrogène, du tétrachlorure de silicium et, le cas échéant, du gaz chlorhydrique en présence d'un catalyseur, **caractérisé en ce que** le catalyseur présente un diamètre moyen des grains inférieur d'un facteur 50 à 100 au diamètre moyen des grains du silicium utilisé.

2. Procédé selon la revendication 1, **caractérisé en ce que** le silicium présente un diamètre moyen des grains de 10 à 1000 µm.

3. Procédé selon au moins l'une des revendications 1 à 2, **caractérisé en ce qu'**un oxyde de cuivre est utilisé comme catalyseur.

4. Procédé selon au moins l'une des revendications 1 à 2, **caractérisé en ce qu'**un halogénure de cuivre est utilisé comme catalyseur.

5. Procédé selon au moins l'une des revendications 1 à 2, **caractérisé en ce qu'**une poudre de fer et/ou un halogénure de fer est utilisé comme catalyseur.

6. Procédé selon au moins l'une des revendications 1 à 5, **caractérisé en ce que** la concentration du catalyseur dans le mélange constitué du silicium et du catalyseur, calculée en tant que métal, est de 0,5 à 10% par rapport au poids du mélange.

7. Procédé selon au moins l'une des revendications 1 à 6, **caractérisé en ce que** la transformation est réalisée à une pression de 1 à 40 bar (absolue).

8. Procédé selon au moins l'une des revendications 1 à 7, **caractérisé en ce que** la transformation est réalisée à des températures de 400 à 800°C.

9. Procédé selon au moins l'une des revendications 1 à 8, **caractérisé en ce que** le rapport molaire entre l'hydrogène et le tétrachlorure de silicium est de 0,25:1 à 4:1.

10. Procédé selon au moins l'une des revendications 1 à 8, **caractérisé en ce que** le rapport molaire entre le tétrachlorure de silicium et le gaz chlorhydrique est de 1:0 à 1:10.

11. Procédé de fabrication de silane et/ou de silicium de haute pureté avec les étapes suivantes :
- transformation du silicium avec de l'hydrogène et, le cas échéant, du gaz chlorhydrique, en présence d'un catalyseur qui présente un diamètre moyen de grains inférieur d'un facteur 50 à 100 au diamètre moyen des grains du silicium utilisé,
- fabrication du silane et/ou du silicium de haute pureté à partir du trichlorosilane fabriqué à l'aide de la transformation.
